# EUROPÄISCHE PATENTSCHRIFT

(11) **EP 3 885 624 B1**
(45) Veröffentlichungstag und Bekanntmachung des Hinweises auf die Patenterteilung: **27.09.2023**
(21) Anmeldenummer: 20165475.3
(22) Anmeldetag: 25.03.2020
(51) Int. Cl.: F16L 19/04, F16L 19/05

(54) **ROHRVERBINDUNG**
PIPE CONNECTOR
RACCORD TUBULAIRE

(43) Veröffentlichungstag der Anmeldung: 29.09.2021
(73) Patentinhaber: Georg Fischer JRG AG, 4450 Sissach (CH)
(72) Erfinder: BÜRLI, Stephan, 4451 Wintersingen (CH)
(74) Vertreter: Fenner, Seraina

(56) Entgegenhaltungen:
- EP-A1- 0 886 095
- DE-A1- 1 475 752
- DE-A1- 4 025 877
- DE-B- 1 019 517
- US-A- 2 326 929

## Beschreibung

Die Erfindung betrifft eine Vorrichtung zum Verbinden von starren Rohrleitungen beinhaltend ein Fitting, eine Überwurfmutter, wobei die Überwurfmutter mit dem Fitting verschraubbar ist, eine Hülse, ein Klemmelement, wobei das Klemmelement der Fixierung des eingeführten Rohrendes dient, einen Klemmring, eine vorherrschende Anpresskraft und ein eingeführtes Rohrende.

Die DE 1 959 098 offenbart eine Rohrverbindung bei der die Konusfläche der Rohrerweiterung an der Konusfläche des Nippels anliegt und an dieser eine Dichtung in einer Nut angeordnet ist um die Dichtheit zwischen Nippel und Rohrende zu gewährleisten, wobei die Rohrerweiterung während der Montage und des Zusammenschraubens der Rohrverbindung entsteht.

Nachteilig hierbei ist, dass bei der Montage eine separate Dichtung einzusetzen ist.

Wird diese vergessen, ist die Verbindung undicht und der Montagevorgang muss wiederholt werden. Zudem können nur kleinere Durchmesser mit einer solchen Verbindung verschraubt werden, da grössere Rohrdurchmesser aufgrund des relativ hohen Widerstands der Mutter und durch die Aufbördelung des Rohrendes während des Zusammenschraubens der Rohrverbindung weder manuell noch mit Hilfe eines Werkzeugs, aufgrund des sehr hohen Anziehmoments, verschraubbar sind.

Vorrichtungen ohne Dichtungen sind aus der US 2,326,929 oder der DE 1475752 bekannt.

Es ist Aufgabe der Erfindung eine Vorrichtung zum Verbinden einer starren Rohrleitung vorzuschlagen, welche einfach und fehlerlos in der Montage ist und sich auch für Rohrleitungen eignet die einen grösseren Durchmesser aufweisen, bzw. für Rohrleitungen ab einem Nenndurchmesser von 32 mm (DN32), vorzugsweise für Rohre mit einem Nenndurchmesser zwischen 50 und 75 mm (DN 50-75).

Diese Aufgabe wird erfindungsgemäss durch die Merkmale des Anspruchs 1 gelöst. Vorteilhafte Ausführungen sind in den abhängigen Ansprüchen definiert.

Die erfindungsgemässe Vorrichtung zum Verbinden von starren Rohrleitungen, wobei die Rohrleitungen vorzugsweise aus Rohren aus Kunststoff oder einem Mehrschichtverbundmaterial hergestellt sind, beinhaltet ein Fitting, eine Überwurfmutter, wobei die Überwurfmutter mit dem Fitting verschraubbar ist. Vorzugsweise weist das Fitting ein Aussengewinde auf und die Überwurfmutter das entsprechende Innengewinde. Zudem weist die erfindungsgemässe Vorrichtung eine Hülse und ein Klemmelement auf, wobei das Klemmelement der Fixierung des eingeführten Rohrendes dient. Vorzugsweise umschliesst die Hülse das Klemmelement, wobei die Hülse das Klemmelement in axialer Richtung nicht komplett umgeben muss aber kann. Das Klemmelement weist einen durchgehenden axialen Spalt auf, wodurch der Durchmesser des Klemmelements variabel ist und dadurch eine Fixierung am eingeführten Rohrende erfolgt. Indem das Klemmelement von der Hülse aufgenommen wird, wird das Klemmelement bzw. dessen Durchmesser verringert und wird auf das eingeführte Rohrende gepresst. Die erfindungsgemässe Vorrichtung weist zudem einen Klemmring, eine vorherrschende Anpresskraft und ein eingeführtes Rohrende auf, wobei die vorherrschende Anpresskraft durch ein Fitting aus Polyphenylsulfon (PPSU), der während der Alterung elastisch bleibt und dadurch die Anpresskraft aufrecht hält, gebildet wird. Die Vorrichtung beinhaltet eine Lagerung, wobei die Lagerung der Drehbewegung der Überwurfmutter dient, das heisst, dass die Lagerung den beim Festziehen der Überwurfmutter auftretenden Widerstand wesentlich reduziert. Dadurch wird es ermöglicht, die Überwurfmutter am Fitting festzuziehen, um die Aufweitung bzw. Aufbördelung des Rohrendes, welche beim Zusammenziehen bzw. Zusammenschrauben der Vorrichtung erzeugt wird, an der Stirnseite der Phase des Fittings anzupressen und mittels Klemmring und vorherrschender Anpresskraft eine Dichtheit zu gewährleisten indem die Aufweitung des Rohrendes eine Dichtfläche bildet und an der Fase des Fittings anliegt. Es bedarf keinem weiteren zusätzlichen Dichtelement. Die blosse Aufweitung der Rohrleitung bildet eine Dichtfläche und gewährleistet mit dem Anpressen die Dichtheit.

Die Lagerung ist vorzugsweise zwischen der Überwurfmutter und der Hülse angeordnet und verhindert eine Übertragung des Anziehmoments von der

Überwurfmutter auf das eingeführte Rohrende bzw. auf die Hülse. Zudem minimierte die Lagerung den Widerstand zwischen der Überwurfmutter und der Hülse.

Als eine alternative Ausführungsform hat sich gezeigt, wenn der Klemmring und das Klemmelement zusammen als ein Teil bzw. einteilig ausgebildet sind.

Als vorteilhaft hat sich auch gezeigt, wenn die Aufweitung des Rohrendes konisch ausgebildet ist.

Die erfindungsgemässe Vorrichtung zum Verbinden von Rohrleitungen wird vorzugsweise im Sanitärbereich verwendet.

Alternativ, jedoch nicht im Rahmen der Erfindung, wird die vorherrschende Anpresskraft durch eine Tellerfeder erzeugt. Diese ist vorzugsweise zwischen Klemmelement und Klemmring angeordnet und drückt die Aufweitung an die Phase des Fittings.

Erfindungsgemäß wird die vorherrschende Anpresskraft dadurch gebildet, dass das Fitting aus dem Kunststoff Polyphenylsulfon (PPSU) hergestellt ist, der während der Alterung elastisch bleibt.

Dieses Material bleibt im Gegensatz zu anderen Kunststoffen während der Alterung elastisch und hält dadurch die Anpresskraft auf die Aufweitung des Rohrendes aufrecht

Als vorteilhaft hat sich gezeigt, wenn ein Führungselement am Aussendurchmesser des Klemmelements angeordnet ist. Dies dient dazu, dass sich das geschlitzte Klemmelement, bevor die Vorrichtung montiert ist und das Klemmelement von der Hülse umfasst ist, nicht derart im Durchmesser erweitert, dass es sich nicht mehr in die Hülse einschieben lässt. Das Führungselement hält das Klemmelement radial in Position, wodurch es sich im Durchmesser nicht erweitern kann. Als vorteilhaft hat sich gezeigt, wenn als Führungselement ein O-Ring eingesetzt wird.

Als alternative Ausgestaltung der erfindungsgemässen Vorrichtung weist der Klemmring eine Führungsschürze auf. Dies gewährleistet, dass das Klemmelement bereits vor der fertig durchgeführten Montage radial geführt ist und auch eine axiale Führung vorliegt, damit sich die Teile während der Montage nicht in eine ungewollte Position verschieben.

Vorzugsweise weist das Klemmelement eine Verzahnung zur Verkrallung am Aussendurchmesser des eingeführten Rohrendes auf. Dadurch wird gewährleistet, dass das Rohrende fest in der Vorrichtung verankert ist.

Als bevorzugte Ausführungsform hat sich gezeigt, wenn das eingeführte Rohrende und das Fitting denselben Innendurchmesser aufweisen. Dadurch wird eine Querschnittsverengung vermieden und das Medium kann ungehindert durch die Rohrleitung strömen.

Vorzugsweise ist die Lagerung als Kugellager ausgebildet. Diese ermöglicht eine kompakte Bauweise der erfindungsgemässen Vorrichtung, jedoch sind auch andere Wälzkörper denkbar.

Es ist vorteilhaft, wenn die erfindungsgemässe Vorrichtung im verschraubten bzw. montierten Zustand starr verbunden ist und keine Verdrehungen der einzelnen Komponenten zueinander möglich sind. Die montierte Vorrichtung lässt somit keine rotative und/oder axiale Bewegung zu.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen Längsschnitt einer verschraubten Vorrichtung zum Verbinden von starren Rohrleitungen,
- Fig. 2: einen Längsschnitt durch eine Vorrichtung die noch nicht montiert ist,
- Fig. 3: einen Längsschnitt einer verschraubten erfindungsgemässen Vorrichtung zum Verbinden von starren Rohrleitungen ohne Tellerfeder und
- Fig. 4: einen Längsschnitt einer verschraubten Vorrichtung zum Verbinden von starren Rohrleitungen mit Führungsschürze am Klemmring.

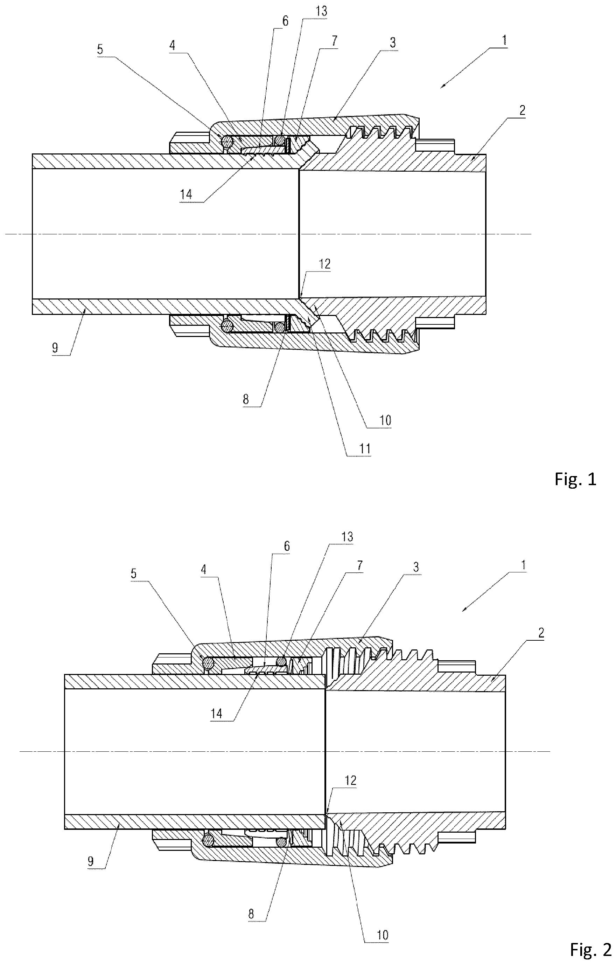

Die in Fig. 1 dargestellte Zeichnung zeigt eine nicht von den Ansprüchen abgedeckte Vorrichtung 1 zum Verbinden von starren Rohrleitungen vorzugsweise im Sanitärbereich. Wobei die zu verbindenden Rohre aus Kunststoff oder einem Mehrschichtverbundmaterial sein können. Die Vorrichtung 1 beinhaltet ein Fitting 2 mit einem Aussengewinde und eine Überwurfmutter 3 mit einem entsprechenden Innengewinde zum gegenseitigen Verschrauben. Zudem weist die Vorrichtung 1 eine Hülse 4 auf, die ein Klemmelement 6 umgibt und welche von der Überwurfmutter 3 aufgenommen wird. Das Klemmelement 6 weist einen durchgehenden axialen Spalt auf, wodurch das Klemmelement 6 um den kompletten Umfang des eingeführten Rohrendes 9 pressbar ist und dadurch das Rohrende 9 in der Vorrichtung 1 gesichert und fixiert ist. Des Weiteren weist die Vorrichtung 1 eine Lagerung 5 auf, wobei die Lagerung 5 vorzugsweise als Kugellager ausgebildet ist aber auch andere Lagerungen, vorzugsweise mit Wälzkörper, sind geeignet. Die Lagerung 5 dient der Reduzierung des Anziehmoments der Überwurfmutter 3 da dadurch das Anziehen erleichtert wird und so auch grössere Durchmesser mit einer solchen Verbindung verschraubt werden können. Die Lagerung 5 befindet sich zwischen der Überwurfmutter 3 und der Hülse 4, wobei die Hülse 4 das Klemmelement 6 auf das Rohrende 9 drückt um dieses im fertig montierten Zustand zu fixieren. Damit sich das Klemmelement 6 gut am Aussendurchmessers des Rohrendes 9 verkrallt, weist es vorzugsweise eine Verzahnung 14 auf. Im Inneren der Vorrichtung 1 ist zudem ein Klemmring 7 und eine Tellerfeder 8 angeordnet, diese drücken in montiertem Zustand auf die Aufweitung 11 des Rohrendes 9, die durch das blosse Festziehen der Vorrichtung 1 gebildet wird. In Fig. 2 ist die nicht von den Ansprüchen abgedeckte Vorrichtung 1 vor der fertigen Montage ersichtlich. Es ist gut zu erkennen, dass das eingeführte Rohrende 9 noch keine Aufweitung 11 aufweist, diese wird mittels Zusammenziehen bzw. Verschrauben der Vorrichtung 1 erzielt indem das Rohrende 9 an der Phase 10 des Fittings 2 aufgeschoben und zu einer konischen Aufweitung verformt wird, wie in Fig. 1 ersichtlich. Die anliegende Fläche der Aufweitung 11 bildet eine Dichtfläche 12, wobei die Dichtfläche 12 an der Phase 10 des Fittings 2 anliegt und das Anpressen des Klemmrings 7 mit Hilfe der Tellerfeder 8 auf die Aufweitung 11 ausgeübt wird.

Dadurch wird die Dichtheit gewährleistet ohne ein separates Dichtelement in der Vorrichtung vorsehen zu müssen. Ein weiterer Vorteil der Vorrichtung 1 liegt darin, dass der mediumsführende Innendurchmesser des Fittings 2 wie auch die angeschlossene Rohrleitung bzw. das eingeführte Rohrende 9 denselben Innendurchmesser aufweisen, dadurch können Widerstände in der Leitung vermieden werden. Es ist vorteilhaft, wenn die Vorrichtung 1 ein Führungselement 13 aufweist, welches den Durchmesser des Klemmelements 6 begrenzt solange es noch nicht von der Hülse 4 umfasst ist. Die erfindungsgemässe Vorrichtung 1 ist in montiertem Zustand starr, dass heisst, sie lässt sich weder rotativ noch linear bewegen wie auch das eingeführte Rohrende 9 sich weder zur Überwurfmutter noch zum Fitting 2 verdrehen lässt.

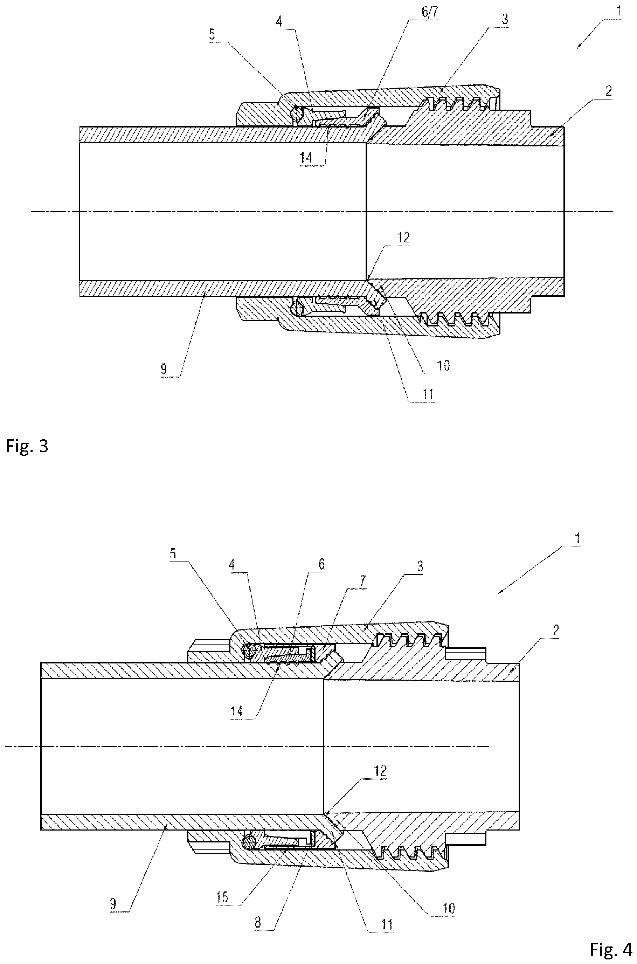

Fig. 3 zeigt die erfindungsgemäße Vorrichtung 1 in der die vorherrschende Anpresskraft auf die Dichtfläche 12 aufgrund des aus Polyphenylsulfon (PPSU) hergestellten Fittings 2 erzeugt wird. Dadurch kann auf ein separates Element, das eine Anpresskraft aufbringt, wie eine Tellerfeder, verzichtet werden. Zudem zeigt Fig. 3 eine Variante der erfindungsgemässen Vorrichtung 1, bei der das Klemmelement 6 und der Klemmring 7 als ein Teil ausgebildet sind. Selbstverständlich sind auch bei der Ausführung der Verwendung eines Fittings 2 aus Polyphenylsulfon (PPSU) das Klemmelement 6 und der Klemmring 7 als separat ausgebildete Teile möglich, wie auch die einteilige Variante in den anderen Ausführungsform Anwendung finden kann.

In Fig. 4 wird eine weitere nicht von den Ansprüchen abgedeckte Vorrichtung 1 dargestellt, wobei in dieser das Klemmelement 6 durch die am Klemmring 7 angeordnete Führungsschürze 7 radial geführt und axial gehalten wird.

### Bezugszeichenliste

- 1: Vorrichtung
- 2: Fitting
- 3: Überwurfmutter
- 4: Hülse
- 5: Lagerung
- 6: Klemmelement
- 7: Klemmring
- 8: Tellerfeder
- 9: Rohrende
- 10: Phase Fitting
- 11: Aufweitung Rohrende
- 12: Dichtfläche
- 13: Führungselement
- 14: Verzahnung
- 15: Führungsschürze

## Patentansprüche

1. Vorrichtung (1) zum Verbinden von starren Rohrleitungen beinhaltend ein Fitting (2), eine Überwurfmutter (3), wobei die Überwurfmutter (3) mit dem Fitting (2) verschraubbar ist, eine Hülse (4), ein Klemmelement (6), wobei das Klemmelement (6) der Fixierung des eingeführten Rohrendes (9) dient, einen Klemmring (7), eine vorherrschende Anpresskraft und ein eingeführtes Rohrende (9), wobei die Vorrichtung (1) eine Lagerung (5) beinhaltet, wobei die Lagerung (5) der Drehbewegung der Überwurfmutter (3) dient und das Fitting (2) an der Stirnseite eine Fase (10) und das Rohrende (9) eine Aufweitung (11) aufweist, wobei die Aufweitung (11) eine Dichtfläche (12) bildet, wobei die Dichtfläche an der Fase (10) des Fittings (2) anliegt und der Klemmring (7) und die vorherrschende Anpresskraft dem Anpressen der Aufweitung (11) bzw. der Dichtfläche (12) dient, **dadurch gekennzeichnet, dass** das Fitting (2) aus Polyphenylsulfon (PPSU) hergestellt ist, wobei durch das Fitting (2) aus Polyphenylsulfon (PPSU) die vorherrschende Anpresskraft gebildet wird.

2. Vorrichtung (1) nach Anspruch 1, **dadurch gekennzeichnet, dass** ein Führungselement (13) am Aussendurchmesser des Klemmelements (6) angeordnet ist.

3. Vorrichtung nach einem der Ansprüche 1 oder 2, **dadurch gekennzeichnet, dass** der Klemmring (7) eine Führungsschürze aufweist.

4. Vorrichtung (1) nach einem der Ansprüche 1 bis 3, **dadurch gekennzeichnet dass** das Klemmelement (6) eine Verzahnung zur Verkrallung in den Ausserdurchmesser des eingeführten Rohrendes aufweist.

5. Vorrichtung (1) nach einem der Ansprüche 1 bis 4, **dadurch gekennzeichnet, dass** das eingeführte Rohrende (9) und das Fitting (2) denselben Innendurchmesser aufweisen.

6. Vorrichtung (1) nach einem der Ansprüche 1 bis 5, **dadurch gekennzeichnet, dass** die Lagerung (5) als Kugellager ausgebildet ist.

7. Vorrichtung (1) nach einem der Ansprüche 1 bis 6, **dadurch gekennzeichnet, dass** die Vorrichtung (1) in montiertem Zustand starr verbunden ist und keine rotative und/oder axiale Bewegung zulässt.

## Claims

1. Device (1) for connecting rigid pipe lines, comprising a fitting (2), a union nut (3), wherein the union nut (3) is able to be screwed to the fitting (2), a sleeve (4), a clamping element (6), wherein the clamping element (6) serves for fixing the inserted pipe end (9), a clamping ring (7), a prevailing contact-pressure force and an inserted pipe end (9), wherein the device (1) comprises a mounting (5), wherein the mounting (5) serves for rotational movement of the union nut (3) and the fitting (2) has a bevel (10) at the end face and the pipe end (9) has a widened portion (11), wherein the widened portion (11) forms a sealing surface (12), wherein the sealing surface bears against the bevel (10) of the fitting (2) and the clamping ring (7) and the prevailing contact-pressure force serve for pressing-on of the widened portion (11) or the sealing surface (12), **characterized in that** the fitting (2) is produced from polyphenyl sulphone (PPSU), wherein the prevailing contact-pressure force is formed by the fitting (2) composed of polyphenyl sulphone (PPSU).

2. Device (1) according to Claim 1,
**characterized in that** a guide element (13) is arranged on the outer diameter of the clamping element (6).

3. Device according to either of Claims 1 and 2,
**characterized in that** the clamping ring (7) has a guide skirt.

4. Device (1) according to one of Claims 1 to 3,
**characterized in that** the clamping element (6) has a toothing for penetrating into the outer diameter of the inserted pipe end.

5. Device (1) according to one of Claims 1 to 4,
**characterized in that** the inserted pipe end (9) and the fitting (2) have the same inner diameter.

6. Device (1) according to one of Claims 1 to 5,
**characterized in that** the mounting (5) is in the form of a ball bearing.

7. Device (1) according to one of Claims 1 to 6,
**characterized in that**, in the fitted state, the device (1) is rigidly connected and does not permit any rotational and/or axial movement.

## Revendications

1. Dispositif (1) pour raccorder des conduites tubulaires rigides, comprenant un raccord (2), un écrou-raccord (3), l'écrou-raccord (3) étant apte à être vissé sur le raccord (2), une douille (4), un élément de serrage (6), l'élément de serrage (6) servant à fixer l'extrémité de conduite (9) insérée, une bague de serrage (7), une force de pression prédominante et une extrémité de conduite (9) insérée, le dispositif (1) comprenant un palier (5), le palier (5) servant au mouvement de rotation de l'écrou-raccord (3) et le raccord (2) présentant un chanfrein (10) sur la face frontale et l'extrémité de conduite (9) un élargissement (11), l'élargissement (11) formant une surface d'étanchéité (12), la surface d'étanchéité s'appliquant contre le chanfrein (10) du raccord (2) et la bague de serrage (7) et la force de pression prédominante servant à presser l'élargissement (11) ou le raccord de la surface d'étanchéité (12), **caractérisé en ce que** le raccord (2) est fabriqué en polyphénylsulfone (PPSU), la force de pression prédominante étant formée par le raccord (2) en polyphénylsulfone (PPSU).

2. Dispositif (1) selon la revendication 1, **caractérisé en ce qu'**un élément de guidage (13) est agencé sur le diamètre extérieur de l'élément de serrage (6).

3. Dispositif selon l'une des revendications 1 ou 2, **caractérisé en ce que** la bague de serrage (7) présente une jupe de guidage.

4. Dispositif (1) selon l'une des revendications 1 à 3, **caractérisé en ce que** l'élément de serrage (6) présente une denture pour s'encliqueter dans le diamètre extérieur de l'extrémité de la conduite insérée.

5. Dispositif (1) selon l'une des revendications 1 à 4, **caractérisé en ce que** l'extrémité (9) de la conduite insérée et le raccord (2) présentent le même diamètre intérieur.

6. Dispositif (1) selon l'une des revendications 1 à 5, **caractérisé en ce que** le palier (5) est réalisé sous la forme d'un roulement à billes.

7. Dispositif (1) selon l'une des revendications 1 à 6, **caractérisé en ce que** le dispositif (1) est relié de manière rigide à l'état monté et n'autorise aucun mouvement rotatif et/ou axial.
